# EUROPEAN PATENT APPLICATION

(11) **EP 4 838 280 A2**
(43) Date of publication of application: **11.11.2026**
(21) Application number: 26200497.1
(22) Date of filing: 24.08.2026
(51) Int. Cl.: G02B 9/64

(54) **OPTICAL LENS, CAMERA MODULE, AND ELECTRONIC DEVICE**

(30) Priority: 31.12.2025 CN 202512047484
(71) Applicant: Jiangxi OFILM Optical Co., Ltd., Nanchang, Jiangxi 330096 (CN)
(72) Inventor: WANG, Shengxiong, Nanchang, 330096 (CN); WEI, Xianghan, Nanchang, 330096 (CN); YUE, Guoqiang, Nanchang, 330096 (CN)
(74) Representative: Metida

(57) **Abstract**

An optical lens, a camera module, and an electronic device are disclosed. The optical lens 100 includes seven lenses having refractive power and arranged in sequence from an object side to an image side. The first lens has positive refractive power with a convex object-side surface and a concave image-side surface; the second lens has negative refractive power with two concave surfaces; the third lens has positive refractive power with a convex image-side surface; the fourth lens has positive refractive power with a convex object-side surface; the fifth lens has negative refractive power with a convex object-side surface and a concave image-side surface; the sixth lens has positive refractive power with a convex object-side surface; and the seventh lens has negative refractive power with a concave object-side surface. The optical lens satisfies 34 deg ≤ FOV ≤ 42 deg and 1.5 ≤ FNO ≤ 1.65. The optical lens provides high resolution together with a large aperture and high relative illumination.

## Description

### FIELD

The present disclosure relates to the field of optical imaging technologies, and in particular to an optical lens, a camera module, and an electronic device.

### BACKGROUND

With the development of optical imaging technologies, optical lenses are widely applied to security monitoring, in-vehicle imaging, intelligent detection, and other fields. In an in-vehicle imaging system, an optical lens may cooperate with electronic-control software to record driving information and may serve as an important component of an advanced driver-assistance system, thereby providing an optical basis for safety functions such as vehicle-lane-departure warning and collision warning. An in-vehicle imaging lens therefore needs to provide clear imaging under day, night, and other operating conditions, while satisfying requirements for high resolution, a large aperture, high relative illumination, high contrast, and low noise.

Conventional optical lenses used in automobiles are generally unable to simultaneously satisfy the requirements for high resolution, a large aperture, and high relative illumination.

### SUMMARY

The present disclosure provides an optical lens, a camera module, and an electronic device, which can achieve high resolution while also satisfying requirements for a large aperture and high relative illumination.

According to a first aspect, an optical lens includes a total of seven lenses having refractive power and arranged in sequence from an object side to an image side along an optical axis: a first lens , a second lens , a third lens , a fourth lens , a fifth lens , a sixth lens , and a seventh lens. The first lens has positive refractive power, an object-side surface thereof is convex near the optical axis, and an image-side surface thereof is concave near the optical axis. The second lens has negative refractive power, and both an object-side surface and an image-side surface thereof are concave near the optical axis. The third lens has positive refractive power, and an image-side surface thereof is convex near the optical axis. The fourth lens has positive refractive power, and an object-side surface thereof is convex near the optical axis. The fifth lens has negative refractive power, an object-side surface thereof is convex near the optical axis, and an image-side surface thereof is concave near the optical axis. The sixth lens has positive refractive power, and an object-side surface thereof is convex near the optical axis. The seventh lens has negative refractive power, and an object-side surface thereof is concave near the optical axis. The optical lens satisfies: 34 deg ≤ FOV ≤ 42 deg and 1.5 ≤ FNO ≤ 1.65, where FOV is the maximum full field of view of the optical lens , and FNO is the f-number of the optical lens.

The positive first lens cooperates with the concave image-side surface to balance spherical aberration and to facilitate collection of light from a wide field. The negative second lens cooperates with its two concave surfaces to correct axial aberration and reduce system sensitivity. The positive third lens cooperates with its convex image-side surface to cause divergent light to be directed into the subsequent lens group and to balance aberrations. The positive fourth lens cooperates with its convex object-side surface to converge light and reduce the rear lens diameters. The negative fifth lens and the positive sixth lens form a positive-negative cemented lens group, which corrects chromatic aberration and improves assembly stability. The negative seventh lens cooperates with its concave object-side surface to correct off-axis aberrations and enlarge the imaging range.

The range 34 deg ≤ FOV ≤ 42 deg permits a relatively large scene range to be captured without unduly increasing distortion and off-axis aberrations.

The range 1.5 ≤ FNO ≤ 1.65 provides a large aperture and high relative illumination while controlling aberrations and manufacturing sensitivity.

In optional embodiments, the optical lens satisfies at least one of the following relationships: 1.9 ≤ TTL/F ≤ 2.3; 2.2 deg/mm ≤ FOV/F ≤ 3.4 deg/mm; and 1.9 ≤ ΣCT/ΣAT ≤ 4. TTL is the distance on the optical axis from the object-side surface of the first lens to an imaging surface , F is the focal length of the optical lens , ΣCT is the sum of the center thicknesses of the first through seventh lenses, and ΣAT is the sum of the air gaps between adjacent ones of the first through seventh lenses; when the fifth lens and the sixth lens are cemented, the air gap therebetween is taken as zero.

In optional embodiments, the optical lens satisfies at least one of the following relationships: -4 ≤ F1/F2 ≤ -1.5; 1 ≤ F3/F ≤ 5; -1.7 ≤ F4/F5 ≤ -0.8; and -1 ≤ F7/F ≤ -0.7, where F1, F2, F3, F4, F5, and F7 are the focal lengths of the corresponding lenses.

In optional embodiments, the optical lens satisfies at least one of the following relationships: 0.7 ≤ CT5/CT4 ≤ 3; 0.85 ≤ CT6/CT5 ≤ 2.1; and -13 ≤ F2/CT2 ≤ -3, where CT2, CT4, CT5, and CT6 are the respective center thicknesses on the optical axis.

In optional embodiments, the optical lens satisfies at least one of the following relationships: 1 ≤ |R5/R6| ≤ 4; 1.7 ≤ R9/R10 ≤ 2.6; and 1.4 ≤ F7/R13 ≤ 2.1, where R5 and R6 are the radii of curvature of the object-side and image-side surfaces of the third lens, R9 and R10 are the radii of curvature of the object-side and image-side surfaces of the fifth lens, and R13 is the radius of curvature of the object-side surface of the seventh lens.

In optional embodiments, the optical lens satisfies at least one of the following relationships: 4.5 ≤ SD1/SAGS1 ≤ 8.2; 1.45 ≤ SAGS10/SAGS9 ≤ 1.95; and -2.3 ≤ SAGS13/CT7 ≤ -0.3. Each SAGS value is a signed axial distance, with the direction from the object side toward the image side defined as positive. SD1 is the maximum effective semi-aperture of the object-side surface. SAGS1 is the signed axial distance, at the maximum effective semi-aperture of the object-side surface , relative to the intersection of that surface and the optical axis; SAGS9 and SAGS10 are corresponding signed axial distances of the object-side and image-side surfaces of the fifth lens; and SAGS13 is the corresponding signed axial distance of the object-side surface of the seventh lens.

In optional embodiments, the optical lens satisfies at least one of the following relationships: 1 ≤ SD7/SD6 ≤ 1.25; 1.2 ≤ CT3/ET3 ≤ 2.3; and 1.6 ≤ CT6/ET6 ≤ 3. SD6 is the maximum effective semi-aperture of the image-side surface of the third lens, SD7 is the maximum effective semi-aperture of the object-side surface of the fourth lens, and ET3 and ET6 are the respective edge thicknesses measured parallel to the optical axis at the corresponding maximum effective semi-apertures.

In optional embodiments, the optical lens satisfies at least one of the following relationships: 27 deg ≤ FOV×IMGH/SD1 ≤ 48 deg; 111 deg ≤ FOV×F/IMGH ≤ 115 deg; and 21 deg ≤ FOV/FNO ≤ 26 deg. FOV is the maximum full field of view, and IMGH is the distance on the imaging surface from the optical axis to an image point at the maximum field, namely, the maximum half image height.

According to a second aspect, a camera module includes the optical lens and an image sensor disposed on the image side of the optical lens .

According to a third aspect, an electronic device includes a housing and the camera module , the camera module being disposed on or in the housing .

Accordingly, the optical lens, the camera module, and the electronic device can simultaneously provide high resolution, a large aperture, high relative illumination, a compact configuration, and favorable aberration correction.

### BRIEF DESCRIPTION OF THE DRAWINGS

The accompanying drawings, which form a part of the present specification, illustrate embodiments of the present disclosure and, together with the description, explain principles of the present disclosure.
FIG. 1 is a schematic cross-sectional view of an optical lens according to a first embodiment.
FIG. 2 shows spherical-aberration, astigmatism, and distortion curves of the first embodiment.
FIG. 3 is a schematic cross-sectional view of an optical lens according to a second embodiment.
FIG. 4 shows spherical-aberration, astigmatism, and distortion curves of the second embodiment.
FIG. 5 is a schematic cross-sectional view of an optical lens according to a third embodiment.
FIG. 6 shows spherical-aberration, astigmatism, and distortion curves of the third embodiment.
FIG. 7 is a schematic cross-sectional view of an optical lens according to a fourth embodiment.
FIG. 8 shows spherical-aberration, astigmatism, and distortion curves of the fourth embodiment.
FIG. 9 is a schematic cross-sectional view of an optical lens according to a fifth embodiment.
FIG. 10 shows spherical-aberration, astigmatism, and distortion curves of the fifth embodiment.
FIG. 11 is a schematic cross-sectional view of an optical lens according to a sixth embodiment.
FIG. 12 shows spherical-aberration, astigmatism, and distortion curves of the sixth embodiment.
FIG. 13 is a schematic cross-sectional view of an optical lens according to a seventh embodiment.
FIG. 14 shows spherical-aberration, astigmatism, and distortion curves of the seventh embodiment.
FIG. 15 is a schematic view of a camera module. and FIG. 16 is a schematic view of an electronic device implemented as a vehicle.

### DETAILED DESCRIPTION

Reference will now be made in detail to embodiments of the present disclosure, examples of which are illustrated in the accompanying drawings. The described embodiments are explanatory and do not limit the present disclosure.

The terms "first," "second," and the like are used only to distinguish corresponding elements and do not indicate an order or importance unless the context clearly indicates otherwise.

A feature described with reference to one embodiment may be applied to another embodiment when the features are not mutually inconsistent. The singular forms "a," "an," and "the" include plural referents unless the context clearly indicates otherwise.

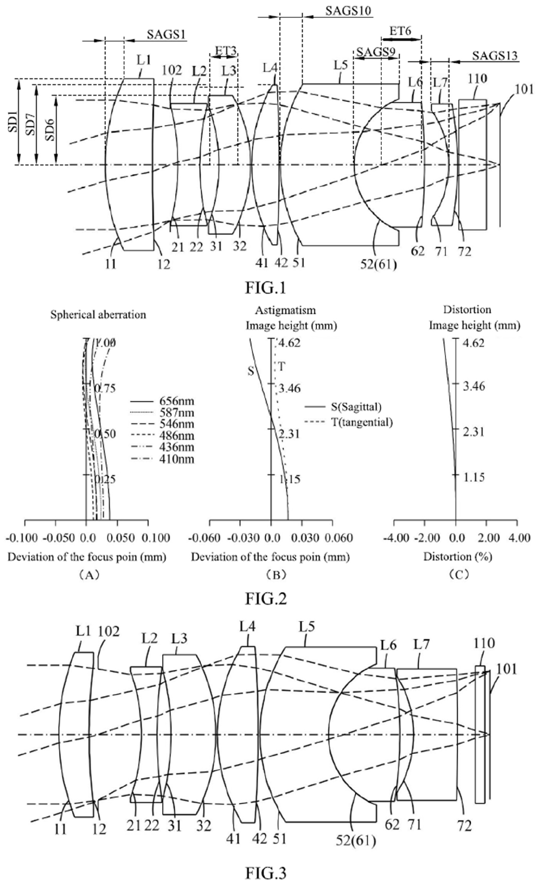

As shown in FIG. 1, the optical lens 100 includes, in order from the object side to the image side along the optical axis, the first lens L1, the second lens L2, the third lens L3, the fourth lens L4, the fifth lens L5, the sixth lens L6, and the seventh lens L7. An aperture stop 102, a protective glass 110, and the imaging surface 101 may also be disposed along the optical path.

The first lens L1, the third lens L3, the fourth lens L4, and the sixth lens L6 have positive refractive power. The second lens L2, the fifth lens L5, and the seventh lens L7 have negative refractive power.

The object-side surface 11 of the first lens is convex near the optical axis and the image-side surface 12 thereof is concave near the optical axis. The two surfaces 21, 22 of the second lens are concave near the optical axis. The image-side surface 32 of the third lens is convex near the optical axis. The object-side surface 41 of the fourth lens is convex near the optical axis. The object-side surface 51 and the image-side surface 52 of the fifth lens are respectively convex and concave near the optical axis. The object-side surface 61 of the sixth lens is convex near the optical axis. The object-side surface 71 of the seventh lens is concave near the optical axis, and the image-side surface 72 may be convex, concave, or planar near the optical axis. The fifth lens L5 and the sixth lens L6 are cemented to one another, and the image-side surface 52 of the fifth lens and the object-side surface 61 of the sixth lens form the same cemented interface.

The first lens primarily converges incident light and balances spherical aberration. The second lens provides negative power to balance the positive power of the first lens and reduce sensitivity. The third lens has positive power and, together with its convex image-side surface, directs divergent light toward the rear lens group and balances aberrations.

The fourth lens converges light and controls the diameter of the rear lens group. The positive-negative cemented group formed by the fifth and sixth lenses corrects chromatic aberration while reducing assembly error. The seventh lens corrects off-axis aberrations and enlarges the available image field.

The lenses may be made of glass, plastic, or a combination thereof. Glass lenses provide good thermal stability, and a combination of materials may reduce the shift of back focus caused by temperature changes over high- and low-temperature operating conditions.

Each lens surface may be spherical or aspherical. An aspherical surface may be represented by a conventional even-order aspherical equation, and its coefficients may be selected according to optical-design requirements.

The stop 102 may be an aperture stop and may be positioned between the first lens L1 and the second lens L2, as illustrated in the embodiments.

The protective glass 110 is disposed between the image-side surface 72 of the seventh lens L7 and the imaging surface 101 and is positioned near the image sensor to protect the image sensor.

A filter may be disposed between the seventh lens L7 and the imaging surface 101. The filter may be an infrared-cut filter, a band-pass filter, or another filter selected according to imaging requirements. An infrared-cut filter transmits visible light while blocking at least part of infrared light.

The optical lens 100 satisfies 34 deg ≤ FOV ≤ 42 deg, thereby obtaining a relatively large scene range while controlling distortion and off-axis aberration.

The optical lens 100 satisfies 1.5 ≤ FNO ≤ 1.65, thereby providing a large aperture and high relative illumination without unduly increasing aberration and manufacturing sensitivity. $1.9 \leq TTL / F \leq 2.3$

TTL is the distance along the optical axis from the object-side surface 11 of the first lens L1 to the imaging surface 101, and F is the focal length of the optical lens 100. This relationship helps control total track length while retaining sufficient focal length. $2.2 deg / mm \leq FOV / F \leq 3.4 deg / mm$

This relationship enables the optical lens 100 to photograph a wide-range scene while controlling the focal length and image quality. $1.9 \leq ΣCT / ΣAT \leq 4$

ΣCT is the sum of the center thicknesses of the seven lenses and ΣAT is the sum of the air gaps between adjacent lenses. Because the fifth lens L5 and the sixth lens L6 are cemented, the air gap therebetween is taken as zero. The relationship balances structural compactness, assembly space, and sensitivity. $- 4 \leq F 1 / F 2 \leq - 1.5$

The relationship balances the positive power of the first lens and the negative power of the second lens, and thereby contributes to spherical-aberration correction and sensitivity control. $1 \leq F 3 / F \leq 5$

The positive power of the third lens is controlled to direct the ray bundle toward the rear group and to balance aberrations. $- 1.7 \leq F 4 / F 5 \leq - 0.8$ The positive fourth lens and negative fifth lens cooperate to converge rays and correct chromatic aberration. $- 1 \leq F 7 / F \leq - 0.7$

The power of the seventh lens is controlled to correct off-axis aberrations and to support a wide imaging range. $0.7 \leq CT 5 / CT 4 \leq 3$

The center thicknesses of the fourth and fifth lenses are balanced to facilitate manufacture and assembly while maintaining aberration correction. $0.85 \leq CT 6 / CT 5 \leq 2.1$

The center thicknesses of the cemented fifth and sixth lenses are balanced to control cemented-group strength and chromatic-aberration correction. $- 13 \leq F 2 / CT 2 \leq - 3$

The power and center thickness of the second lens are controlled to reduce sensitivity and facilitate manufacture. $1 \leq \left|R5/R6\right| \leq 4$

This relationship controls the surface shapes of the third lens and supports aberration correction. $1.7 \leq R 9 / R 10 \leq 2.6$

This relationship controls the bending of the fifth lens and the performance of the cemented lens group. $1.4 \leq F 7 / R 13 \leq 2.1$

This relationship balances the negative power of the seventh lens and the curvature of its object-side surface so as to achieve high-quality imaging. $4.5 \leq SD 1 / SAGS 1 \leq 8.2$

The sign of SAGS1 is determined with the direction from the object side toward the image side defined as positive. SAGS1 is the signed axial distance, at the maximum effective semi-aperture of the object-side surface 11, relative to the intersection of the surface and the optical axis. The relationship can compress the front-lens profile while controlling manufacturability. $1.45 \leq SAGS 10 / SAGS 9 \leq 1.95$

The signs of SAGS9 and SAGS10 are determined with the direction from the object side toward the image side defined as positive. SAGS9 and SAGS10 are signed axial distances at the respective maximum effective semi-apertures of the object-side and image-side surfaces of the fifth lens. The relationship controls the bending of the fifth lens and improves the cemented-group performance. $- 2.3 \leq SAGS 13 / CT 7 \leq - 0.3$

SAGS13 is the signed axial distance, at the maximum effective semi-aperture of the object-side surface 71 of the seventh lens, relative to the intersection of the surface and the optical axis, with the direction from the object side toward the image side defined as positive, and CT7 is the center thickness of the seventh lens. This relationship controls the bending and center thickness of the seventh lens while satisfying aberration-correction requirements and facilitating manufacture. A value greater than -0.3 may provide insufficient bending or an excessive center thickness, whereas a value less than -2.3 may provide excessive bending or an insufficient center thickness, increasing manufacturing, assembly, and stray-light-control difficulty. $1 \leq SD 7 / SD 6 \leq 1.25$

SD6 is the maximum effective semi-aperture of the image-side surface 32 of the third lens, and SD7 is the maximum effective semi-aperture of the object-side surface 41 of the fourth lens. This relationship matches the ray-bundle apertures of the two surfaces, avoids an abrupt aperture change, and enables light to enter the fourth lens smoothly and ultimately reach the imaging surface 101. $1.2 \leq CT 3 / ET 3 \leq 2.3$

CT3 is the center thickness of the third lens, and ET3 is the thickness parallel to the optical axis between the corresponding maximum effective semi-aperture points of the third lens. The relationship facilitates manufacture and aberration correction. $1.6 \leq CT 6 / ET 6 \leq 3$

CT6 is the center thickness of the sixth lens, and ET6 is the thickness parallel to the optical axis between the corresponding maximum effective semi-aperture points of the sixth lens. The relationship controls edge thickness and structural strength. $27 deg \leq FOV \times IMGH / SD 1 \leq 48 deg$

FOV is the maximum full field of view of the optical lens 100, IMGH is the distance on the imaging surface 101 from the optical axis to an image point at the maximum field, namely, the maximum half image height, and SD1 is the maximum effective semi-aperture of the first lens object-side surface. The relationship balances field of view, image height, and front-lens diameter. $111 deg \leq FOV \times F / IMGH \leq 115 deg$

The relationship balances the maximum full field of view, focal length, and maximum half image height. $21 deg \leq FOV / FNO \leq 26 deg$

The relationship balances the field of view and f-number to achieve both a large imaging range and a large aperture.

Seven exemplary optical prescriptions are described below. Unless otherwise indicated, dimensions are in millimeters, radii and focal lengths are signed according to the optical-design convention used in the tables, and "infinity" denotes a planar surface.

In a first embodiment, the optical lens 100 has the configuration shown in FIG. 1. F = 15.09 mm, FNO = 1.55, FOV = 34.32 deg, and IMGH = 4.616 mm.

Other parameters of the optical lens 100 are provided in Table 1. The refractive indices and focal lengths in Table 1 are values at the reference wavelength of 587 nm, and the Abbe numbers are calculated from the refractive indices at the characteristic spectral lines of the corresponding materials.

| **TABLE 1** | | | | | | | | |
|---|---|---|---|---|---|---|---|---|
| **Surface No.** | **Element** | **Surface type** | **Radius** | **Thickness** | **Material** | **Index** | **Abbe No.** | **Focal length** |
| | Object | | infinity | infinity | | | | |
| 1 | First lens L1 | Spherical | 15.6439 | 3.5033 | Glass | 1.7620 | 57.8550 | 22.3838 |
| 2 | | Spherical | 163.1149 | 1.2995 | | | | |
| 3 | Stop 102 | Spherical | infinity | 0.5861 | | | | |
| 4 | Second lens L2 | Spherical | -17.4815 | 1.6076 | Glass | 1.6846 | 34.5250 | -12.6878 |
| 5 | | Spherical | 18.1591 | 1.4155 | | | | |
| 6 | Third lens L3 | Spherical | -12.7594 | 2.3180 | Glass | 1.6764 | 58.6520 | 73.4495 |
| 7 | | Spherical | -10.9071 | 0.1020 | | | | |
| 8 | Fourth lens L4 | Spherical | 12.7678 | 1.9964 | Glass | 1.5739 | 65.4120 | 20.1726 |
| 9 | | Spherical | -121.8143 | 0.1040 | | | | |
| 10 | Fifth lens L5 | Spherical | 12.0898 | 5.4329 | Glass | 1.8222 | 31.4870 | -18.3772 |
| 11 | Sixth lens L6 | Spherical | 5.3664 | 5.2070 | Glass | 1.5964 | 60.2135 | 8.3667 |
| 12 | | Spherical | -47.9784 | 1.7827 | | | | |
| 13 | Seventh lens L7 | Spherical | -7.2254 | 0.6152 | Glass | 1.6746 | 32.5869 | -14.9719 |
| 14 | | Spherical | -25.7935 | 0.1140 | | | | |
| 15 | Protective glass 110 | Spherical | infinity | 2.0288 | Glass | 1.5233 | 54.5172 | |
| 16 | | Spherical | infinity | 1.0002 | | | | |
| 17 | Image surface 101 | Spherical | infinity | 0.0000 | | | | |

FIG. 2 shows spherical aberration, astigmatism, and distortion of the first embodiment. In the spherical-aberration graph, the horizontal axis represents focal shift and the vertical axis represents normalized pupil radius (normalized aperture coordinate). In the astigmatism and distortion graphs, the vertical axis represents the image height. The illustrated curves show that spherical aberration, astigmatism, and distortion are controlled within acceptable ranges.

In a second embodiment, the optical lens 100 has the configuration shown in FIG. 3. F = 15.3 mm, FNO = 1.5, FOV = 34.6 deg, and IMGH = 4.649 mm.

Other parameters of the optical lens 100 are provided in Table 2. The refractive indices and focal lengths in Table 2 are values at the reference wavelength of 587 nm, and the Abbe numbers are calculated from the refractive indices at the characteristic spectral lines of the corresponding materials.

| **TABLE 2** | | | | | | | | |
|---|---|---|---|---|---|---|---|---|
| **Surface No.** | **Element** | **Surface type** | **Radius** | **Thickness** | **Material** | **Index** | **Abbe No.** | **Focal length** |
| | Object | | infinity | infinity | | | | |
| 1 | First lens L1 | Spherical | 16.7204 | 2.1910 | Glass | 1.7620 | 57.8550 | 31.9364 |
| 2 | | Spherical | 49.9461 | 0.6185 | | | | |
| 3 | Stop 102 | Spherical | infinity | 3.1522 | | | | |
| 4 | Second lens L2 | Spherical | -13.8531 | 1.1302 | Glass | 1.6846 | 34.5250 | -14.1161 |
| 5 | | Spherical | 33.7855 | 1.0148 | | | | |
| 6 | Third lens L3 | Spherical | -19.5778 | 3.2693 | Glass | 1.6764 | 58.6520 | 43.9005 |
| 7 | | Spherical | -12.6160 | 0.1030 | | | | |
| 8 | Fourth lens L4 | Spherical | 12.7861 | 2.9472 | Glass | 1.5739 | 65.4120 | 19.7529 |
| 9 | | Spherical | -94.5965 | 0.1410 | | | | |
| 10 | Fifth lens L5 | Spherical | 12.2520 | 4.9374 | Glass | 1.8222 | 31.4870 | -18.7605 |
| 11 | Sixth lens L6 | Spherical | 5.6000 | 5.1943 | Glass | 1.5964 | 60.2135 | 8.3905 |
| 12 | | Spherical | -31.8730 | 0.9893 | | | | |
| 13 | Seventh lens L7 | Spherical | -8.1554 | 3.1558 | Glass | 1.6746 | 32.5869 | -12.6659 |
| 14 | | Spherical | -179.9499 | 1.2882 | | | | |
| 15 | Protective glass 110 | Spherical | infinity | 0.7120 | Glass | 1.5233 | 54.5172 | |
| 16 | | Spherical | infinity | 0.3599 | | | | |
| 17 | Image surface 101 | Spherical | infinity | 0.0000 | | | | |
| | | | | | | | | |

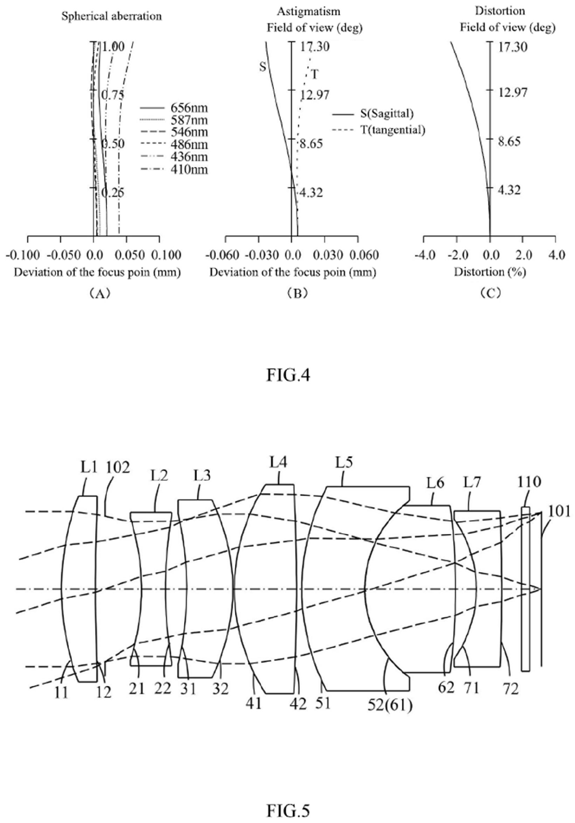

FIG. 4 shows spherical aberration, astigmatism, and distortion of the second embodiment. In the spherical-aberration graph, the horizontal axis represents focal shift and the vertical axis represents normalized pupil radius (normalized aperture coordinate). In the astigmatism and distortion graphs, the vertical axis represents the half field angle. The illustrated curves show that spherical aberration, astigmatism, and distortion are controlled within acceptable ranges.

In a third embodiment, the optical lens 100 has the configuration shown in FIG. 5. F = 15 mm, FNO = 1.57, FOV = 35.4 deg, and IMGH = 4.711 mm.

Other parameters of the optical lens 100 are provided in Table 3. The refractive indices and focal lengths in Table 3 are values at the reference wavelength of 587 nm, and the Abbe numbers are calculated from the refractive indices at the characteristic spectral lines of the corresponding materials.

| **TABLE 3** | | | | | | | | |
|---|---|---|---|---|---|---|---|---|
| **Surface No.** | **Element** | **Surface type** | **Radius** | **Thickness** | **Material** | **Index** | **Abbe No.** | **Focal length** |
| | Object | | infinity | infinity | | | | |
| 1 | First lens L1 | Spherical | 16.3545 | 2.0915 | Glass | 1.7620 | 57.8550 | 24.2126 |
| 2 | | Spherical | 131.7755 | 0.5527 | | | | |
| 3 | Stop 102 | Spherical | infinity | 2.2293 | | | | |
| 4 | Second lens L2 | Spherical | -14.4627 | 1.4504 | Glass | 1.6846 | 34.5250 | -13.4176 |
| 5 | | Spherical | 26.7066 | 1.3029 | | | | |
| 6 | Third lens L3 | Spherical | -20.1827 | 2.8051 | Glass | 1.6764 | 58.6520 | 41.3058 |
| 7 | | Spherical | -12.3978 | 0.1065 | | | | |
| 8 | Fourth lens L4 | Spherical | 11.9225 | 3.7671 | Glass | 1.5739 | 65.4120 | 19.0619 |
| 9 | | Spherical | -122.8190 | 0.3260 | | | | |
| 10 | Fifth lens L5 | Spherical | 13.8593 | 3.8444 | Glass | 1.8222 | 31.4870 | -21.7213 |
| 11 | Sixth lens L6 | Spherical | 6.8450 | 5.5050 | Glass | 1.5964 | 60.2135 | 10.1840 |
| 12 | | Spherical | -39.0362 | 1.2528 | | | | |
| 13 | Seventh lens L7 | Spherical | -7.6063 | 1.5304 | Glass | 1.6746 | 32.5869 | -11.9286 |
| 14 | | Spherical | -133.5600 | 1.2363 | | | | |
| 15 | Protective glass 110 | Spherical | infinity | 0.5000 | Glass | 1.5233 | 54.5172 | |
| 16 | | Spherical | infinity | 0.6975 | | | | |
| 17 | Image surface 101 | Spherical | infinity | 0.0000 | | | | |

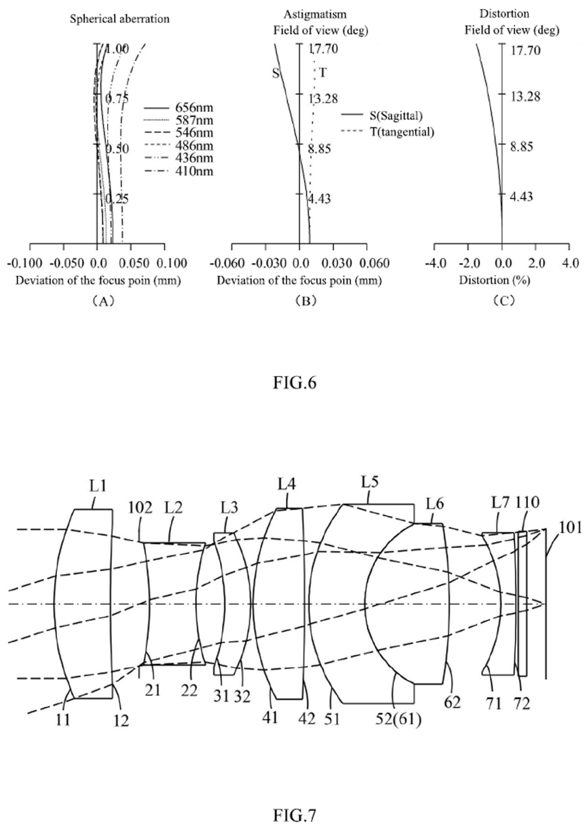

FIG. 6 shows spherical aberration, astigmatism, and distortion of the third embodiment. In the spherical-aberration graph, the horizontal axis represents focal shift and the vertical axis represents normalized pupil radius (normalized aperture coordinate). In the astigmatism and distortion graphs, the vertical axis represents the half field angle. The illustrated curves show that spherical aberration, astigmatism, and distortion are controlled within acceptable ranges.

In a fourth embodiment, the optical lens 100 has the configuration shown in FIG. 7. F = 15.056 mm, FNO = 1.61, FOV = 36 deg, and IMGH = 4.724 mm.

Other parameters of the optical lens 100 are provided in Table 4. The refractive indices and focal lengths in Table 4 are values at the reference wavelength of 587 nm, and the Abbe numbers are calculated from the refractive indices at the characteristic spectral lines of the corresponding materials.

| **TABLE 4** | | | | | | | | |
|---|---|---|---|---|---|---|---|---|
| **Surface No.** | **Element** | **Surface type** | **Radius** | **Thickness** | **Material** | **Index** | **Abbe No.** | **Focal length** |
| | Object | | infinity | infinity | | | | |
| 1 | First lens L1 | Spherical | 14.5269 | 3.4916 | Glass | 1.7620 | 57.8550 | 22.0293 |
| 2 | | Spherical | 94.1870 | 1.7735 | | | | |
| 3 | Stop 102 | Spherical | infinity | 0.6454 | | | | |
| 4 | Second lens L2 | Spherical | -19.3652 | 2.8600 | Glass | 1.6846 | 34.5250 | -10.7841 |
| 5 | | Spherical | 12.7923 | 1.7953 | | | | |
| 6 | Third lens L3 | Spherical | -11.5722 | 1.5953 | Glass | 1.6764 | 58.6520 | 73.3891 |
| 7 | | Spherical | -9.9153 | 0.1460 | | | | |
| 8 | Fourth lens L4 | Spherical | 13.1825 | 3.1761 | Glass | 1.5739 | 65.4120 | 20.8723 |
| 9 | | Spherical | -124.6000 | 0.2440 | | | | |
| 10 | Fifth lens L5 | Spherical | 10.3169 | 3.4603 | Glass | 1.8222 | 31.4870 | -22.9396 |
| 11 | Sixth lens L6 | Spherical | 5.6705 | 5.2176 | Glass | 1.5964 | 60.2135 | 8.4976 |
| 12 | | Spherical | -32.4660 | 3.1722 | | | | |
| 13 | Seventh lens L7 | Spherical | -8.6156 | 0.9560 | Glass | 1.6746 | 32.5869 | -14.3285 |
| 14 | | Spherical | -78.2057 | 0.1590 | | | | |
| 15 | Protective glass 110 | Spherical | infinity | 0.5000 | Glass | 1.5233 | 54.5172 | |
| 16 | | Spherical | infinity | 1.2100 | | | | |
| 17 | Image surface 101 | Spherical | infinity | 0.0000 | | | | |

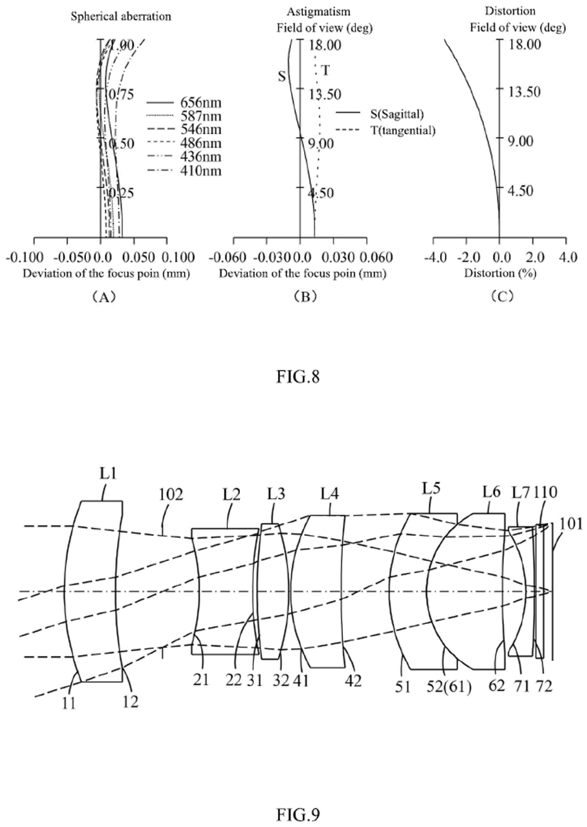

FIG. 8 shows spherical aberration, astigmatism, and distortion of the fourth embodiment. In the spherical-aberration graph, the horizontal axis represents focal shift and the vertical axis represents normalized pupil radius (normalized aperture coordinate). In the astigmatism and distortion graphs, the vertical axis represents the half field angle. The illustrated curves show that spherical aberration, astigmatism, and distortion are controlled within acceptable ranges.

In a fifth embodiment, the optical lens 100 has the configuration shown in FIG. 9. F = 15.0541 mm, FNO = 1.65, FOV = 36.4 deg, and IMGH = 4.7941 mm.

The object-side surface 31 of the third lens is concave near the optical axis; the other surface shapes may be as described for the first embodiment.

Other parameters of the optical lens 100 are provided in Table 5. The refractive indices and focal lengths in Table 5 are values at the reference wavelength of 587 nm, and the Abbe numbers are calculated from the refractive indices at the characteristic spectral lines of the corresponding materials.

| **TABLE 5** | | | | | | | | |
|---|---|---|---|---|---|---|---|---|
| **Surface No.** | **Element** | **Surface type** | **Radius** | **Thickness** | **Material** | **Index** | **Abbe No.** | **Focal length** |
| | Object | | infinity | infinity | | | | |
| 1 | First lens L1 | Spherical | 17.5723 | 3.5116 | Glass | 1.7620 | 57.8550 | 46.6021 |
| 2 | | Spherical | 31.6448 | 3.2382 | | | | |
| 3 | Stop 102 | Spherical | infinity | 2.5072 | | | | |
| 4 | Second lens L2 | Spherical | -14.0448 | 3.6719 | Glass | 1.6846 | 34.5250 | -12.0805 |
| 5 | | Spherical | 22.6382 | 0.3045 | | | | |
| 6 | Third lens L3 | Spherical | 35.2726 | 2.1674 | Glass | 1.6764 | 58.6520 | 16.3849 |
| 7 | | Spherical | -15.8526 | 0.1292 | | | | |
| 8 | Fourth lens L4 | Spherical | 11.0888 | 3.4431 | Glass | 1.5739 | 65.4120 | 24.0480 |
| 9 | | Spherical | 49.2830 | 3.3089 | | | | |
| 10 | Fifth lens L5 | Spherical | 10.7568 | 2.5488 | Glass | 1.8222 | 31.4870 | -23.6526 |
| 11 | Sixth lens L6 | Spherical | 6.1987 | 5.2294 | Glass | 1.5964 | 60.2135 | 11.2693 |
| 12 | | Spherical | 52.1234 | 1.6123 | | | | |
| 13 | Seventh lens L7 | Spherical | -7.9946 | 0.5639 | Glass | 1.6746 | 32.5869 | -13.1299 |
| 14 | | Spherical | -79.1197 | 0.1151 | | | | |
| 15 | Protective glass 110 | Spherical | infinity | 0.5408 | Glass | 1.5233 | 54.5172 | |
| 16 | | Spherical | infinity | 0.6000 | | | | |
| 17 | Image surface 101 | Spherical | infinity | 0.0000 | | | | |

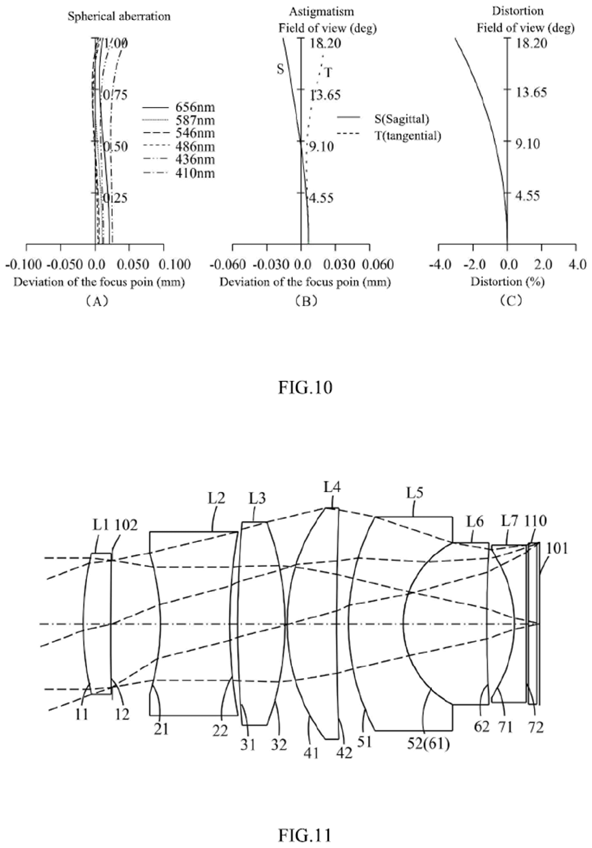

FIG. 10 shows spherical aberration, astigmatism, and distortion of the fifth embodiment. In the spherical-aberration graph, the horizontal axis represents focal shift and the vertical axis represents normalized pupil radius (normalized aperture coordinate). In the astigmatism and distortion graphs, the vertical axis represents the half field angle. The illustrated curves show that spherical aberration, astigmatism, and distortion are controlled within acceptable ranges.

In a sixth embodiment, the optical lens 100 has the configuration shown in FIG. 11. F = 12.49 mm, FNO = 1.65, FOV = 42 deg, and IMGH = 4.7031 mm.

The object-side surface 31 of the third lens is convex near the optical axis, the image-side surface 42 of the fourth lens is concave near the optical axis, the image-side surface 62 of the sixth lens is concave near the optical axis, and the image-side surface 72 of the seventh lens is planar near the optical axis; the other surface shapes are as in the first embodiment.

Other parameters of the optical lens 100 are provided in Table 6. The refractive indices and focal lengths in Table 6 are values at the reference wavelength of 587 nm, and the Abbe numbers are calculated from the refractive indices at the characteristic spectral lines of the corresponding materials.

| **TABLE 6** | | | | | | | | |
|---|---|---|---|---|---|---|---|---|
| **Surface No.** | **Element** | **Surface type** | **Radius** | **Thickness** | **Material** | **Index** | **Abbe No.** | **Focal length** |
| | Object | | infinity | infinity | | | | |
| 1 | First lens L1 | Spherical | 17.1790 | 1.5984 | Glass | 1.7620 | 57.8550 | 23.6338 |
| 2 | | Spherical | 329.6274 | 0.1085 | | | | |
| 3 | Stop 102 | Spherical | infinity | 2.7474 | | | | |
| 4 | Second lens L2 | Spherical | -14.1487 | 4.0091 | Glass | 1.6846 | 34.5250 | -13.5105 |
| 5 | | Spherical | 30.4000 | 0.4428 | | | | |
| 6 | Third lens L3 | Spherical | 61.6747 | 2.7391 | Glass | 1.6764 | 58.6520 | 19.8379 |
| 7 | | Spherical | -16.9293 | 0.1084 | | | | |
| 8 | Fourth lens L4 | Spherical | 11.1092 | 2.8696 | Glass | 1.5739 | 65.4120 | 20.5758 |
| 9 | | Spherical | 160.5905 | 0.6864 | | | | |
| 10 | Fifth lens L5 | Spherical | 13.1865 | 3.1496 | Glass | 1.8222 | 31.4870 | -12.8141 |
| 11 | Sixth lens L6 | Spherical | 5.2444 | 4.8120 | Glass | 1.5964 | 60.2135 | 9.1743 |
| 12 | | Spherical | 75.9838 | 1.6038 | | | | |
| 13 | Seventh lens L7 | Spherical | -7.5246 | 0.6904 | Glass | 1.6746 | 32.5869 | -11.0736 |
| 14 | | Spherical | infinity | 0.1094 | | | | |
| 15 | Protective glass 110 | Spherical | infinity | 0.5000 | Glass | 1.5233 | 54.5172 | |
| 16 | | Spherical | infinity | 0.1532 | | | | |
| 17 | Image surface 101 | Spherical | infinity | 0.0000 | | | | |

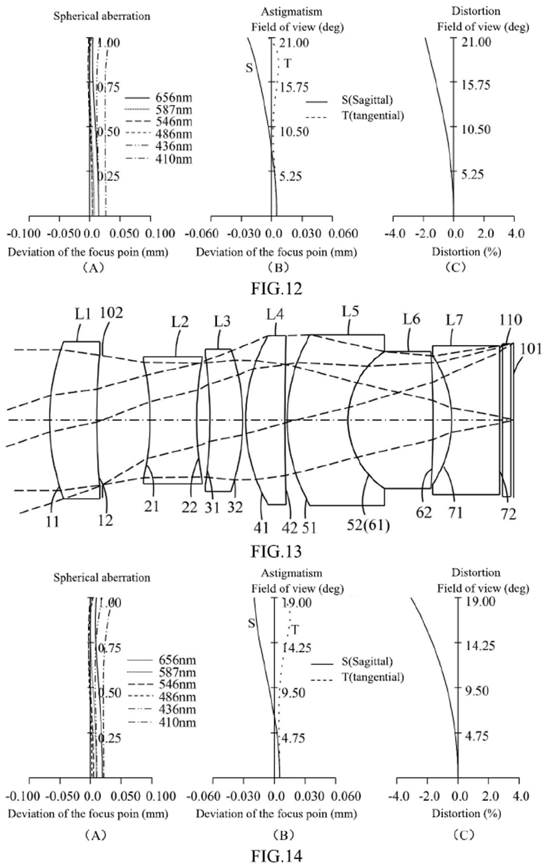

FIG. 12 shows spherical aberration, astigmatism, and distortion of the sixth embodiment. In the spherical-aberration graph, the horizontal axis represents focal shift and the vertical axis represents normalized pupil radius (normalized aperture coordinate). In the astigmatism and distortion graphs, the vertical axis represents the half field angle. The illustrated curves show that spherical aberration, astigmatism, and distortion are controlled within acceptable ranges.

In a seventh embodiment, the optical lens 100 has the configuration shown in FIG. 13. F = 14.5 mm, FNO = 1.65, FOV = 38 deg, and IMGH = 4.8344 mm.

The surface shapes of the seventh embodiment are shown in FIG. 13 and are specified by the radii in Table 7.

Other parameters of the optical lens 100 are provided in Table 7. The refractive indices and focal lengths in Table 7 are values at the reference wavelength of 587 nm, and the Abbe numbers are calculated from the refractive indices at the characteristic spectral lines of the corresponding materials.

| **TABLE 7** | | | | | | | | |
|---|---|---|---|---|---|---|---|---|
| **Surface No.** | **Element** | **Surface type** | **Radius** | **Thickness** | **Material** | **Index** | **Abbe No.** | **Focal length** |
| | Object | | infinity | infinity | | | | |
| 1 | First lens L1 | Spherical | 14.6004 | 2.8889 | Glass | 1.7620 | 57.8550 | 26.2050 |
| 2 | | Spherical | 49.1054 | 0.3498 | | | | |
| 3 | Stop 102 | Spherical | infinity | 2.9174 | | | | |
| 4 | Second lens L2 | Spherical | -17.4506 | 2.8759 | Glass | 1.6846 | 34.5250 | -14.0894 |
| 5 | | Spherical | 23.3740 | 0.8093 | | | | |
| 6 | Third lens L3 | Spherical | -29.6793 | 2.0090 | Glass | 1.6764 | 58.6520 | 37.8805 |
| 7 | | Spherical | -14.1584 | 0.1800 | | | | |
| 8 | Fourth lens L4 | Spherical | 10.8357 | 2.3922 | Glass | 1.5739 | 65.4120 | 19.8451 |
| 9 | | Spherical | 191.3241 | 0.1340 | | | | |
| 10 | Fifth lens L5 | Spherical | 10.7709 | 3.7459 | Glass | 1.8222 | 31.4870 | -17.6911 |
| 11 | Sixth lens L6 | Spherical | 5.2298 | 5.2165 | Glass | 1.5964 | 60.2135 | 8.3108 |
| 12 | | Spherical | -64.2849 | 1.1500 | | | | |
| 13 | Seventh lens L7 | Spherical | -7.4689 | 2.9302 | Glass | 1.6746 | 32.5869 | -10.9917 |
| 14 | | Spherical | infinity | 0.1874 | | | | |
| 15 | Protective glass 110 | Spherical | infinity | 0.5000 | Glass | 1.5233 | 54.5172 | |
| 16 | | Spherical | infinity | 0.1771 | | | | |
| 17 | Image surface 101 | Spherical | infinity | 0.0000 | | | | |

FIG. 14 shows spherical aberration, astigmatism, and distortion of the seventh embodiment. In the spherical-aberration graph, the horizontal axis represents focal shift and the vertical axis represents normalized pupil radius (normalized aperture coordinate). In the astigmatism and distortion graphs, the vertical axis represents the half field angle. The illustrated curves show that spherical aberration, astigmatism, and distortion are controlled within acceptable ranges.

Table 8 summarizes the values of the relationships for the first to seventh embodiments. The values for the second embodiment that depend directly on FOV have been updated consistently with the corrected full FOV of 34.6 deg.

| **TABLE 8 - RELATIONSHIP VALUES** | | | | | | | |
|---|---|---|---|---|---|---|---|
| **Relationship** | **Ex. 1** | **Ex. 2** | **Ex. 3** | **Ex. 4** | **Ex. 5** | **Ex. 6** | **Ex. 7** |
| **FOV (deg)** | 34.32 | 34.6 | 35.4 | 36 | 36.4 | 42 | 38 |
| **FNO** | 1.55 | 1.5 | 1.57 | 1.61 | 1.65 | 1.65 | 1.65 |
| **TTL/F** | 1.9293 | 2.0395 | 1.9465 | 2.0187 | 2.2254 | 2.1079 | 1.9644 |
| **FOV/F** | 2.2744 | 2.2614 | 2.3600 | 2.3904 | 2.4186 | 3.3627 | 2.6225 |
| **∑CT/∑AT** | 3.9095 | 3.7920 | 3.6383 | 2.6692 | 1.9041 | 3.4873 | 3.9814 |
| **F1/F2** | -1.7642 | -2.2624 | -1.8045 | -2.0428 | -3.8576 | -1.7493 | -1.8599 |
| **F3/F** | 4.8674 | 2.8693 | 2.7537 | 4.8731 | 1.0887 | 1.5883 | 2.6143 |
| **F4/F5** | -1.0977 | -1.0529 | -0.8776 | -0.9099 | -1.0167 | -1.6057 | -1.1218 |
| **F7/F** | -0.9922 | -0.8278 | -0.7952 | -0.9514 | -0.8724 | -0.8866 | -0.7586 |
| **CT5/CT4** | 2.7214 | 1.6753 | 1.0205 | 1.0895 | 0.7403 | 1.0976 | 1.5659 |
| **CT6/CTS** | 0.9584 | 1.0521 | 1.4319 | 1.5079 | 2.0517 | 1.5278 | 1.3926 |
| **F2/CT2** | -7.8925 | -12.4922 | -9.2510 | -3.7707 | -3.2899 | -3.3700 | -4.8992 |
| **\|R5/R6\|** | 1.1698 | 1.5518 | 1.6279 | 1.1671 | 2.2250 | 3.6431 | 2.0962 |
| **R9/R10** | 2.2529 | 2.1879 | 2.0247 | 1.8194 | 1.7353 | 2.5144 | 2.0595 |
| **F7/R13** | 2.0721 | 1.5531 | 1.5683 | 1.6631 | 1.6423 | 1.4717 | 1.4717 |
| **SD1/SAGS1** | 5.0068 | 5.8385 | 6.0440 | 4.6085 | 5.2627 | 8.1662 | 5.6890 |
| **SAGS10/SAGS9** | 1.5923 | 1.4990 | 1.5160 | 1.4797 | 1.4643 | 1.9182 | 1.6143 |
| **SAGS13/CT7** | -1.9554 | -0.3577 | -0.8201 | -1.2258 | -2.2405 | -2.0084 | -0.4161 |
| **SD7/SD6** | 1.0985 | 1.0542 | 1.0736 | 1.2018 | 1.1293 | 1.1361 | 1.0826 |
| **CT3/ET3** | 1.2264 | 1.2651 | 1.3169 | 1.3604 | 2.2193 | 1.9361 | 1.3459 |
| **CT6/ET6** | 1.8278 | 1.9806 | 1.6411 | 2.9168 | 1.6387 | 2.5139 | 1.8926 |
| **FOV×IMGH/SD1 (deg)** | 27.0132 | 29.9335 | 31.6622 | 28.2448 | 27.6906 | 47.6529 | 36.8962 |
| **FOV×F/IMGH (deg)** | 112.1919 | 113.8316 | 112.7054 | 114.7696 | 114.2696 | 111.5392 | 113.8962 |
| **FOV/FNO (deg)** | 22.1419 | 23.0667 | 22.5478 | 22.3602 | 22.0606 | 25.4545 | 23.0303 |
| **F1/F** | 1.4834 | 2.0874 | 1.6142 | 1.4628 | 3.0965 | 1.8922 | 1.8085 |
| **F2/F** | -0.8408 | -0.9226 | -0.8945 | -0.7161 | -0.8027 | -1.0817 | -0.9724 |
| **F4/F** | 1.3368 | 1.2910 | 1.2708 | 1.3859 | 1.5979 | 1.6474 | 1.3696 |
| **F5/F** | -1.2178 | -1.2261 | -1.4481 | -1.5232 | -1.5716 | -1.0259 | -1.2209 |
| **F6/F** | 0.5545 | 0.5484 | 0.6789 | 0.5642 | 0.7488 | 0.7345 | 0.5736 |

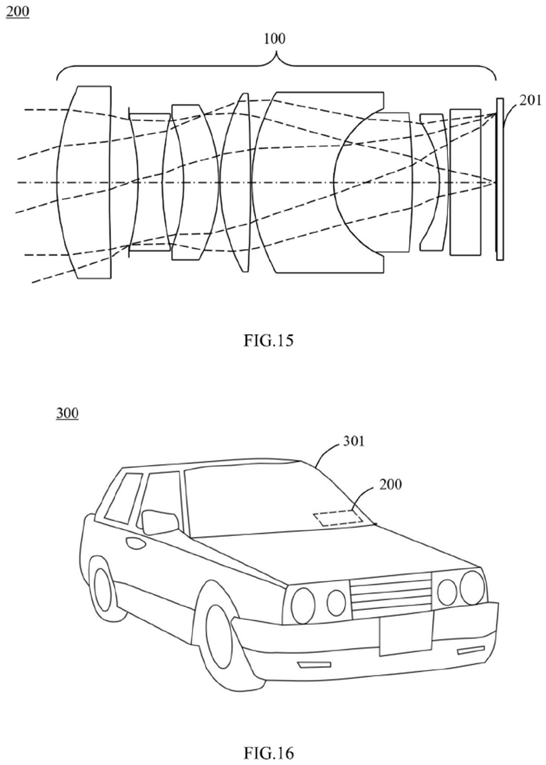

As shown in FIG. 15, the camera module 200 includes the optical lens 100 and the image sensor 201 disposed on the image side thereof. Light from an object passes through the optical lens and is incident on a photosensitive surface of the image sensor. The image sensor may be a complementary metal-oxide-semiconductor (CMOS) sensor or a Charge-Coupled Device (CCD) sensor. The camera module may be an independent camera module integrated into an electronic device.

As shown in FIG. 16, the electronic device 300 includes the housing 301 and the camera module 200, with the camera module disposed on or in the housing. In the illustrated example, the electronic device is a vehicle, and the camera module may be mounted at a front, rear, side, or interior location according to an imaging or driver-assistance requirement. The electronic device may alternatively be another terminal or imaging apparatus.

The optical lens, camera module, and electronic device described above can achieve high resolution while providing a large aperture and high
The foregoing embodiments are illustrative. A person skilled in the art may make modifications or substitutions without departing from the scope of the appended claims. The scope of protection is defined by the claims.

## Claims

1. An optical lens (100), comprising a total of seven lenses having refractive power and arranged in sequence from an object side to an image side along an optical axis: a first lens (L1), a second lens (L2), a third lens (L3), a fourth lens (L4), a fifth lens (L5), a sixth lens (L6), and a seventh lens (L7),
wherein the first lens (L1) has positive refractive power, an object-side surface (11) thereof is convex near the optical axis, and an image-side surface (12) thereof is concave near the optical axis;
the second lens (L2) has negative refractive power, and an object-side surface (21) and an image-side surface (22) thereof are concave near the optical axis;
the third lens (L3) has positive refractive power, and an image-side surface (32) thereof is convex near the optical axis;
the fourth lens (L4) has positive refractive power, and an object-side surface (41) thereof is convex near the optical axis;
the fifth lens (L5) has negative refractive power, an object-side surface (51) thereof is convex near the optical axis, and an image-side surface (52) thereof is concave near the optical axis;
the sixth lens (L6) has positive refractive power, and an object-side surface (61) thereof is convex near the optical axis;
the seventh lens (L7) has negative refractive power, and an object-side surface (71) thereof is concave near the optical axis;
and the optical lens (100) satisfies 34 deg ≤ FOV ≤ 42 deg and 1.5 ≤ FNO ≤ 1.65, where FOV is the maximum full field of view of the optical lens (100), and FNO is the f-number of the optical lens (100).

2. The optical lens (100) according to claim 1, wherein 1.9 ≤ TTL/F ≤ 2.3, where TTL is a distance along the optical axis from the object-side surface (11) of the first lens (L1) to an imaging surface (101), and F is a focal length of the optical lens (100).

3. The optical lens (100) according to claim 1, wherein 2.2 deg/mm ≤ FOV/F ≤ 3.4 deg/mm, and F is a focal length of the optical lens (100).

4. The optical lens (100) according to claim 1, wherein 1.9 ≤ ΣCT/ΣAT ≤ 4, where ΣCT is a sum of center thicknesses of the first through seventh lenses, and ΣAT is a sum of air gaps between adjacent ones of the first through seventh lenses, an air gap between the cemented fifth lens (L5) and sixth lens (L6) being taken as zero.

5. The optical lens (100) according to claim 1, wherein at least one of -4 ≤ F1/F2 ≤ -1.5 and 1 ≤ F3/F ≤ 5 is satisfied, where F1, F2, and F3 are focal lengths of the first, second, and third lenses, respectively, and F is a focal length of the optical lens (100).

6. The optical lens (100) according to claim 1, wherein at least one of -1.7 ≤ F4/F5 ≤ -0.8 and -1 ≤ F7/F ≤ -0.7 is satisfied, where F4, F5, and F7 are focal lengths of the fourth, fifth, and seventh lenses, respectively, and F is a focal length of the optical lens (100).

7. The optical lens (100) according to claim 1, wherein at least one of 0.7 ≤ CT5/CT4 ≤ 3 and 0.85 ≤ CT6/CT5 ≤ 2.1 is satisfied, where CT4, CT5, and CT6 are center thicknesses of the fourth, fifth, and sixth lenses, respectively.

8. The optical lens (100) according to claim 1, wherein -13 ≤ F2/CT2 ≤ -3, where CT2 is a center thickness of the second lens (L2), and F2 is a focal length of the second lens.

9. The optical lens (100) according to claim 1, wherein at least one of 1 ≤ |R5/R6| ≤ 4, 1.7 ≤ R9/R10 ≤ 2.6, and 1.4 ≤ F7/R13 ≤ 2.1 is satisfied, where R5 and R6 are radii of curvature of object-side and image-side surfaces of the third lens, R9 and R10 are radii of curvature of object-side and image-side surfaces of the fifth lens, and R13 is a radius of curvature of the object-side surface of the seventh lens, and F7 is a focal length of the seventh lens.

10. The optical lens (100) according to claim 1, wherein at least one of 4.5 ≤ SD1/SAGS1 ≤ 8.2, 1.45 ≤ SAGS10/SAGS9 ≤ 1.95, and -2.3 ≤ SAGS13/CT7 ≤ -0.3 is satisfied; SD1 is a maximum effective semi-aperture of the object-side surface (11) of the first lens; SAGS1, SAGS9, SAGS10, and SAGS13 are signed axial distances at maximum effective semi-apertures of the object-side surface of the first lens, the object-side surface of the fifth lens, the image-side surface of the fifth lens, and the object-side surface of the seventh lens, respectively, relative to intersections of the respective surfaces and the optical axis, with a direction from the object side toward the image side defined as positive; and CT7 is a center thickness of the seventh lens.

11. The optical lens (100) according to claim 1, wherein 1 ≤ SD7/SD6 ≤ 1.25, where SD6 is a maximum effective semi-aperture of the image-side surface (32) of the third lens and SD7 is a maximum effective semi-aperture of the object-side surface (41) of the fourth lens.

12. The optical lens (100) according to claim 1, wherein at least one of 1.2 ≤ CT3/ET3 ≤ 2.3 and 1.6 ≤ CT6/ET6 ≤ 3 is satisfied, where CT3 and CT6 are center thicknesses of the third and sixth lenses, and ET3 and ET6 are respective edge thicknesses measured parallel to the optical axis at corresponding maximum effective semi-apertures.

13. The optical lens (100) according to claim 1, wherein at least one of 27 deg ≤ FOV×IMGH/SD1 ≤ 48 deg, 111 deg ≤ FOV×F/IMGH ≤ 115 deg, and 21 deg ≤ FOV/FNO ≤ 26 deg is satisfied, where IMGH is a distance on the imaging surface (101) from the optical axis to an image point at the maximum field, namely, a maximum half image height, SD1 is a maximum effective semi-aperture of the object-side surface (11) of the first lens, and F is a focal length of the optical lens (100).

14. A camera module (200), comprising an image sensor (201) and the optical lens (100) according to any one of claims 1 to 13, the image sensor (201) being disposed on an image side of the optical lens (100).

15. An electronic device (300), comprising a housing (301) and the camera module (200) according to claim 14, the camera module (200) being disposed on or in the housing (301).
